# EUROPEAN PATENT APPLICATION

(11) **EP 4 120 519 A1**
(43) Date of publication of application: **18.01.2023**
(21) Application number: 21766940.7
(22) Date of filing: 12.03.2021
(51) Int. Cl.: H02K 7/10

(54) **GEAR MOTOR**

(30) Priority: 13.03.2020 JP 2020043720
(71) Applicant: SUMITOMO HEAVY INDUSTRIES, LTD., Tokyo 141-6025 (JP)
(72) Inventor: YAMAMOTO, Taizo, Yokosuka-shi, Kanagawa 237-8555 (JP); MINARI, Takahiro, Yokosuka-shi, Kanagawa 237-8555 (JP)
(74) Representative: Louis Pöhlau Lohrentz
(86) International application number: PCT/JP2021/010073
(87) International publication number: WO 2021/182612

(57) **Abstract**

A gear motor (1) includes a motor (20) and a speed reducer (30). The speed reducer (30) is a magnetic modulation gear. Accordingly, non-contact power transmission by magnetic force is possible, so that the speed reducer (30) does not require a lubricant and the structure can be simplified.

## Description

### Technical Field

The present invention relates to a gear motor.

### Background Art

In the related art, a gear motor including a motor and a speed reducer has been known (refer to, for example, PTL 1).

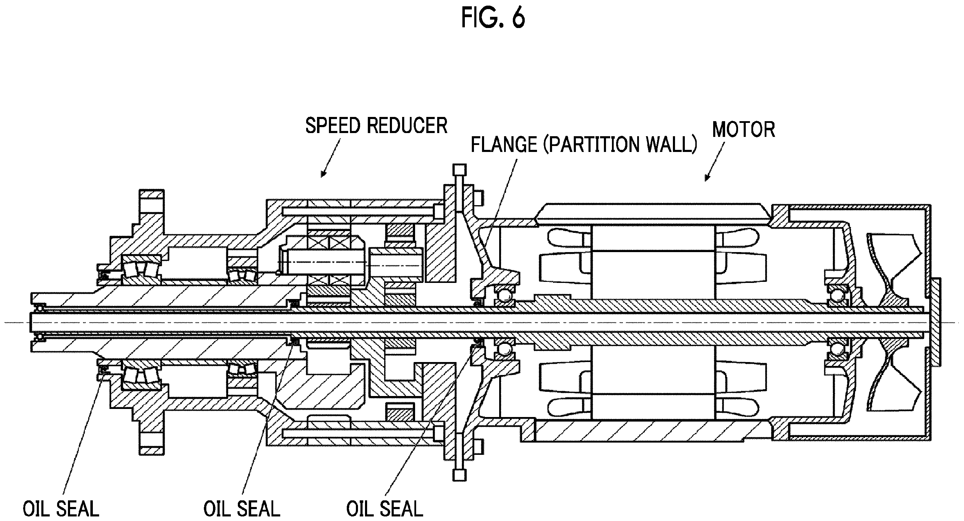

Generally, as shown in Fig. 6, the gear motor is configured such that the motor and the speed reducer formed of mechanical gears are arranged in an axial direction. The motor and the speed reducer are partitioned off from each other by a partition wall such that a lubricant inside the speed reducer does not infiltrate into the motor, and the speed reducer is provided with a plurality of oil seals that seal the lubricant. In addition, shafts of the motor and the speed reducer are supported by a large number of bearings such that each of the motor and the speed reducer is established as a single rotating machine.

As described above, the structure of the gear motor in the related art is complicated, and it is difficult to reduce the number of components and to make the gear motor compact.

### Citation List

### Patent Literature

[PTL 1] Japanese Patent No. 3916337

### Summary of Invention

### Technical Problem

The present invention is conceived in view of the above circumstances, and an object of the present invention is to simplify the structure.

### Solution to Problem

A gear motor according to the present invention includes: a motor and a speed reducer. The speed reducer is a magnetic modulation gear. An output shaft of the motor and an input shaft of the speed reducer are integrally formed.

### Advantageous Effects of Invention

According to the present invention, the structure can be simplified.

### Brief Description of Drawings

Fig. 1 is a cross-sectional view of a gear motor according to the present embodiment.
Fig. 2 is a perspective view of a speed reducer included in the gear motor according to the present embodiment.
Fig. 3 is a cross-sectional view showing a gear motor according to a modification example of the present embodiment.
Fig. 4 is a cross-sectional view showing a gear motor according to another modification example of the present embodiment.
Fig. 5 is a cross-sectional view showing a gear motor according to another modification example of the present embodiment.
Fig. 6 is a cross-sectional view of a gear motor in the related art.

### Description of Embodiments

Hereinafter, an embodiment of the present invention will be described in detail with reference to the drawings.

### [Configuration of gear motor]

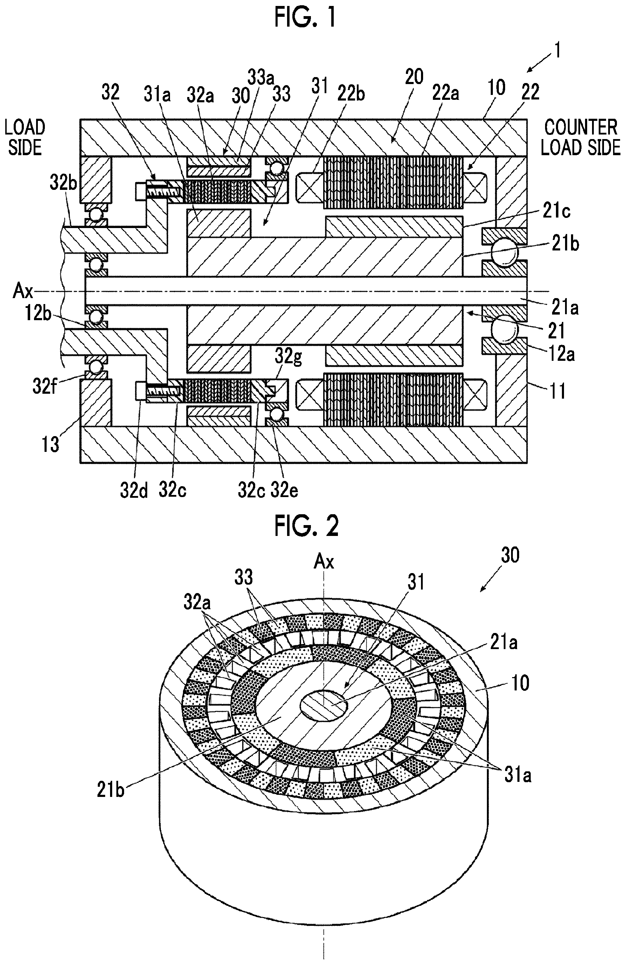

Fig. 1 is a cross-sectional view of a gear motor 1 according to the present embodiment.

As shown in the drawing, the gear motor 1 according to the present embodiment includes a motor 20 and a speed reducer 30, and is configured such that the motor 20 and the speed reducer 30 are accommodated in a common casing (frame) 10.

### <Motor>

The motor 20 includes a motor rotor 21 and a motor stator 22.

The motor rotor 21 includes a shaft 21a, a rotor yoke 21b, and a rotor magnet 21c. The rotor yoke 21b is made of a magnetic body and is fitted and fixed to an outer peripheral surface of the shaft 21a. The rotor magnet 21c is, for example, a permanent magnet such as a neodymium magnet, and a plurality of the rotor magnets 21c corresponding to a predetermined number of poles are attached to a portion of an outer peripheral surface of the rotor yoke 21b located on a radially inner side of the motor stator 22.

Incidentally, in the following description, a direction along a center axis Ax of the shaft 21a is referred to as an "axial direction", a direction perpendicular to the center axis Ax is referred to as a "radial direction", and a rotational direction around the center axis Ax is referred to as a "circumferential direction". In addition, in the axial direction, a side connected to an external driven member (left side in the drawings) is referred to as a "load side", and a side opposite the load side (right side in the drawings) is referred to as a "counter load side".

In addition, the motor rotor 21 is supported by two bearing (for example, ball bearings) 12a and 12b that support the shaft 21a.

Of the bearings 12a and 12b, the bearing 12a on the counter load side is disposed between a counter load-side cover 11 fixed to the casing 10 and the shaft 21a. The counter load-side cover 11 is fixed to the casing 10 to cover the counter load side of the motor stator 22, and rotatably supports the shaft 21a (motor rotor 21) through the bearing 12a.

On the other hand, the bearing 12b on the load side is disposed between a low-speed rotor 32 (output member 32b) of the speed reducer 30 to be described later and the shaft 21a on the load side of the speed reducer 30. The low-speed rotor 32 and the shaft 21a are rotatable relative to each other through the bearing 12b.

The motor stator 22 is formed by winding a coil 22b around a stator core 22a made of stacked steel plates. The motor stator 22 is concentrically disposed on a radially outer side of the motor rotor 21, and is held by the casing 10 in a state where the stator core 22a is internally fitted to the casing 10.

### <Speed reducer>

The speed reducer 30 is disposed on the load side of the motor 20, and reduces a rotation input from the motor 20 to output the reduced rotation to the load side. The speed reducer 30 and the motor 20 has a common shaft (the motor rotor 21 and a high-speed rotor 31) and are not partitioned off from each other by a partition wall or the like.

Specifically, the speed reducer 30 is a magnetic modulation gear and includes the high-speed rotor (input shaft) 31, the low-speed rotor (output shaft) 32, and an outer pole magnet 33.

Fig. 2 is a perspective view of the speed reducer 30.

As shown in Figs. 1 and 2, the high-speed rotor 31 includes the shaft 21a and the rotor yoke 21b that are common to the motor rotor 21 of the motor 20, and an inner pole magnet 31a. The shaft 21a and the rotor yoke 21b extend from the motor 20 to the speed reducer 30 in the axial direction. In the shaft 21a of the shaft 21a and the rotor yoke 21b, opposite end portions in the axial direction extend from the rotor yoke 21b, and the opposite end portions are supported by the bearings 12a and 12b described above. The inner pole magnet 31a is, for example, a permanent magnet such as a neodymium magnet, and a plurality of the inner pole magnets 31a having different polarities are attached to the outer peripheral surface of the rotor yoke 21b to be alternately disposed in the circumferential direction. The inner pole magnets 31a form magnetic poles that do not contribute to the torque generation of the motor 20, and may have the number of poles different from or the same as the number of field magnetic poles of the motor 20. In addition, the inner pole magnets 31a may have an integral ring shape or may be dividedly arranged in the circumferential direction.

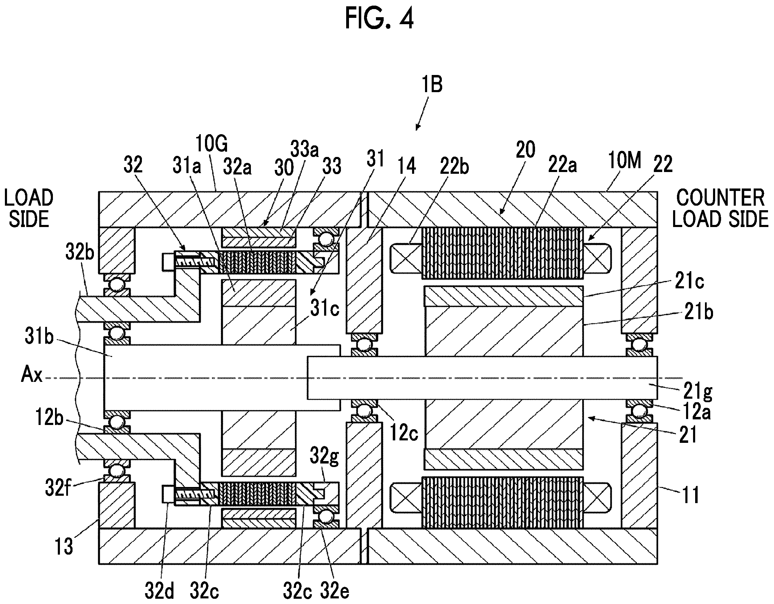

Incidentally, it is preferable that the high-speed rotor 31 is integrally formed with the motor rotor 21, and it is more preferable that the high-speed rotor 31 shares at least one shaft component with the motor rotor 21. In addition, a rotor yoke of the speed reducer 30 may be a body that is separate from the rotor yoke 21b of the motor 20 (refer to Fig. 4).

In the present embodiment, the low-speed rotor 32 is formed in a stepped cylindrical shape and is disposed concentrically with the high-speed rotor 31. The low-speed rotor 32 includes a magnetic pole piece (pole piece) 32a disposed on a radially outer side of the inner pole magnets 31a.

The magnetic pole piece 32a is made of stacked steel plates, and a plurality of the magnetic pole pieces 32a are disposed at predetermined intervals in the circumferential direction. The number of the magnetic pole pieces 32a is the number of outer pole pairs (the number of pole pairs of the outer pole magnets 33) ± the number of inner pole pairs (the number of pole pairs of the inner pole magnets 31a), and is generally the number of outer pole pairs + the number of inner pole pairs. Two magnetic pole pieces 32a adjacent to each other in the circumferential direction may be connected by a thin connecting portion or may be connected by a non-magnetic body.

In addition, the low-speed rotor 32 includes the output member 32b connected to the load side of the magnetic pole pieces 32a. In more detail, resin portions 32c are fixed to opposite axial end portions of the magnetic pole pieces 32a, and the output member 32b is fixed to the resin portion 32c on the load side by a bolt 32d (for example, made of super engineering plastic) . The bolt 32d may be fixed in the radial direction instead of in the axial direction, or may be integrally molded with the resin portion 32c. An end portion on the load side of the output member 32b is exposed from the casing 10 and is connected to the driven member (not shown). The low-speed rotor 32 is rotatably supported by the casing 10 through a bearing 32e provided on the counter load side of the magnetic pole pieces 32a and through a bearing 32f provided on the load side of the magnetic pole pieces 32a. Of the bearings 32e and 32f, the bearing 32e on the counter load side is disposed between the casing 10 and a ring member 32g that is made of stainless steel and that is fixed to the resin portion 32c on the counter load side of the magnetic pole pieces 32a. On the other hand, the bearing 32f on the load side is disposed between the output member 32b and a load-side cover 13 fixed to an end portion on the load side of the casing 10.

The outer pole magnets 33 are concentrically disposed at predetermined gaps on a radially outer side of the magnetic pole pieces 32a. The outer pole magnets 33 have a larger number of poles than that of the inner pole magnets 31a of the high-speed rotor 31, and are a plurality of stators having different polarities that are attached to an inner peripheral surface of the casing 10 through a yoke portion 33a (not shown in Fig. 2) to be alternately disposed in the circumferential direction. In addition, the outer pole magnets 33 may have an integral ring shape or may be dividedly arranged in the circumferential direction.

### [Operation of gear motor]

In the gear motor 1, when the coil 22b of the motor 20 is energized to generate a rotating magnetic field in the motor stator 22, a rotation torque acts on the rotor magnets 21c to rotate the motor rotor 21 around the center axis Ax.

Then, the high-speed rotor 31 of the speed reducer 30 that is integrally formed with the motor rotor 21 also rotates, and the rotation is input to the speed reducer 30. When the high-speed rotor 31 rotates, a spatial magnetic flux waveform of the inner pole magnets 31a of the high-speed rotor 31 is modulated to the same frequency as that of the outer pole magnets 33 by the magnetic pole pieces 32a of the low-speed rotor 32, and the rotation torque is transmitted to the low-speed rotor 32 by a magnetic force between the magnetic pole pieces 32a and the outer pole magnets 33. At this time, a reduction ratio is (the number of magnetic pole pieces/the number of pole pairs of inner pole magnets).

### [Technical effects of present embodiment]

As described above, according to the gear motor 1 of the present embodiment, since the speed reducer 30 is a magnetic modulation gear, non-contact power transmission by magnetic force is possible, so that the speed reducer 30 does not require a lubricant.

Accordingly, the need for a partition wall that partitions the motor 20 and the speed reducer 30 off from each other can be eliminated, and oil seals can be excluded from the counter load-side cover 11 and from the load-side cover 13. Therefore, the structure can be simplified.

In addition, since the oil seals are excluded, the structure does not have a component that is in sliding contact with the shaft, and the structure is such that the circulation of a fluid between the inside and the outside of the gear motor 1 is not suppressed. Further, since the oil seals are excluded, in addition to reducing frictional loss or reducing noise, the oil seals themselves or the replacement of oil is not required, and the cost can be reduced. In addition, since the need for the lubricant can be eliminated, the present invention can be suitably applied to an environment where clean operation is required.

In addition, according to the gear motor 1 of the present embodiment, since the motor rotor (output shaft) 21 of the motor 20 and the high-speed rotor (input shaft) 31 of the speed reducer 30 are integrally formed, the processing of a connecting portion thereof is not required.

Accordingly, the number of components can be reduced or the gear motor 1 can be made compact, namely, the structure can be further simplified.

In addition, according to the gear motor 1 of the present embodiment, the motor rotor 21 of the motor 20 and the high-speed rotor 31 of the speed reducer 30 are supported by the bearing 12b disposed on the load side of the speed reducer 30 and by the bearing 12a disposed on the counter load side of the motor 20.

Namely, because of compactification, the shaft can be supported by only the two bearings 12a and 12b between which the motor 20 and the speed reducer 30 are interposed. For this reason, the number of bearings is reduced as compared to the related art in which the shaft is supported by a large number of bearings, so that the structure can be simplified and the bearing loss can be reduced.

In addition, the gear motor 1 of the present embodiment includes the two bearings 12a and 12b that support the motor rotor 21 of the motor 20 and the high-speed rotor 31 of the speed reducer 30, and two bearings 32e and 32f that support the low-speed rotor (output shaft) 32 of the speed reducer 30.

Namely, four bearings are sufficient in the entirety of the gear motor 1.

### [Modification Example 1]

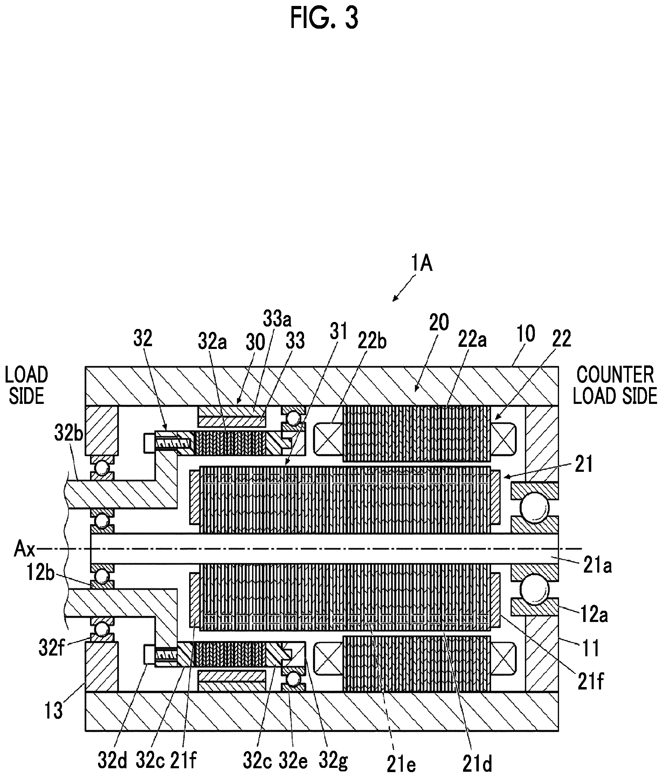

Fig. 3 is a cross-sectional view showing a gear motor 1A according to a modification example of the embodiment.

In the embodiment, the rotor magnets 21c of the motor 20 and the inner pole magnets 31a of the speed reducer 30 form magnetic poles that are independent of each other. However, the field magnetic pole of the motor 20 and the magnetic pole of the high-speed rotor 31 of the speed reducer 30 may be common.

For example, as shown in Fig. 3, in the gear motor 1A according to the present modification example, the motor 20 serves as an induction machine, and instead of the rotor yoke 21b in the embodiment (or on a radially outer side of the rotor yoke 21b), a rotor core 21d made of stacked steel plates is provided from the radially inner side of the motor stator 22 to a radially inner side of the magnetic pole pieces 32a. A plurality of conductor bars (secondary conductors) 21e extending in the axial direction are embedded in the rotor core 21d in the circumferential direction, and opposite axial ends of the conductor bars 21e are connected by respective end rings 21f. Accordingly, the field magnetic pole of the motor 20 and the magnetic pole of the high-speed rotor 31 of the speed reducer 30 can be common.

### [Modification Example 2]

Fig. 4 is a cross-sectional view showing a gear motor 1B according to another modification example of the embodiment.

The gear motor 1B according to the present modification example is different from the embodiment mainly in that the gear motor 1B includes a partition wall that partitions the motor 20 and the speed reducer 30 off from each other. Hereinafter, this difference will be mainly described, and components that are the same as those in the embodiment are denoted by the same reference numbers, and a description thereof will not be repeated.

As shown in Fig. 4, in the gear motor 1B, the casing (frame) is divided into a motor casing 10M that accommodates the motor 20, and a speed reducer casing 10G that accommodates the speed reducer 30.

The motor casing 10M and the speed reducer casing 10G are fixed to a partition wall 14 that partitions the motor 20 and the speed reducer 30 off from each other.

In addition, in the gear motor 1B, unlike the embodiment, the shaft is not common to the motor 20 and the speed reducer 30, and is divided into a motor shaft 21g for the motor 20 and a speed reducer shaft 31b for the speed reducer 30. The motor shaft 21g and the speed reducer shaft 31b are connected (fitted) to each other to make power transmission possible. The motor shaft 21g is rotatably supported by a bearing 12c provided on an inner peripheral portion of the partition wall 14. In addition, unlike the embodiment, the high-speed rotor 31 of the speed reducer 30 includes a rotor yoke 31c that is separate from the rotor yoke 21b of the motor 20.

As described above, the motor 20 and the speed reducer 30 may be partitioned off from each other by the partition wall 14. Even with such a configuration, the same effects as those of the embodiment can be obtained.

Namely, since the speed reducer 30 is a magnetic modulation gear, non-contact power transmission by magnetic force is possible, so that the speed reducer 30 does not require a lubricant. Accordingly, oil seals can be excluded from the counter load-side cover 11, the load-side cover 13, and the partition wall 14. Therefore, the structure can be simplified. In addition, since the oil seals are excluded, in addition to reducing frictional loss or reducing noise, the oil seals themselves or the replacement of oil is not required, and the cost can be reduced. In addition, since the need for the lubricant can be eliminated, the present invention can be suitably applied to an environment where clean operation is required.

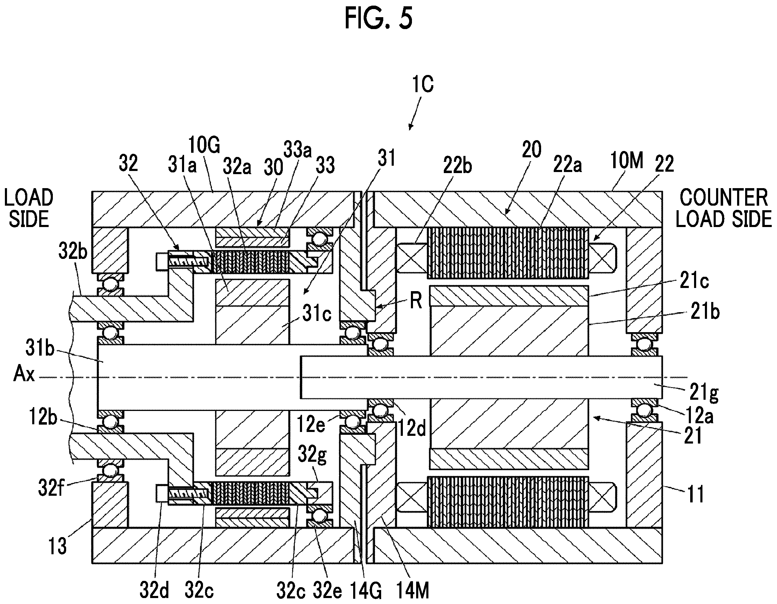

In addition, as shown in Fig. 5, a partition wall that partitions the motor 20 and the speed reducer 30 off from each other may be provided in each of the motor 20 and the speed reducer 30.

Specifically, a gear motor 1C includes a partition wall 14M on a motor 20 side and a partition wall 14G on a speed reducer 30 side. The partition wall 14M on the motor 20 side is fixed to the motor casing 10M. In addition, the partition wall 14M rotatably supports the motor shaft 21g through a bearing 12d provided on an inner peripheral portion of the partition wall 14M. On the other hand, the partition wall 14G on the speed reducer 30 side is fixed to the speed reducer casing 10G. In addition, the partition wall 14G rotatably supports the speed reducer shaft 31b through a bearing 12e provided on an inner peripheral portion of the partition wall 14G.

The partition wall 14M and the partition wall 14G are fitted to be centerable by a spigot joint portion R with a desired accuracy. In addition, the partition wall 14M and the partition wall 14G includes respective flange portions (not shown) protruding, at outer peripheral portions thereof, and are fixed to each other by fastening bolts inserted into the flange portions.

With such a structure, the motor 20 and the speed reducer 30 can be detachably configured.

### [Others]

The embodiment of the present invention has been described above, but the present invention is not limited to the embodiment.

For example, the motor 20 are not particularly limited in type and structure, and as described above, may be a synchronous machine, an induction machine, a DC machine, or the like.

In addition, in the speed reducer 30 of the embodiment, the outer pole magnets 33 serve as stators, and an output is taken out from the low-speed rotor 32 including the magnetic pole pieces 32a, but the magnetic pole pieces 32a may be fixed, the outer pole magnets 33 may be provided in a rotatable low-speed rotor, and an output may be taken out from the low-speed rotor.

In addition, changes can be appropriately made to the detailed parts described in the embodiment without departing from the concept of the invention.

### Industrial Applicability

As described above, the gear motor according to the present invention is useful for simplifying the structure.

### Reference Signs List

1, 1A, 1B, 1C Gear motor
10 Casing
10G Speed reducer casing
10M Motor casing
11 Counter load-side cover
12a to 12e Bearing
13 Load-side cover
14, 14G, 14M Partition wall
20 Motor
21 Motor rotor
21a Shaft
21b Rotor yoke
21c Rotor magnet
21d Rotor core
21e Conductor bar
21f End ring
21g Motor shaft
22 Motor stator
30 Speed reducer
31 High-speed rotor
31a Inner pole magnet
31b Speed reducer shaft
32 Low-speed rotor
32a Magnetic pole piece
32b Output member
32e, 32f Bearing
33 Outer pole magnet
Ax Center axis

## Claims

1. A gear motor comprising:
a motor; and
a speed reducer,
wherein the speed reducer is a magnetic modulation gear.

2. The gear motor according to claim 1,
wherein an output shaft of the motor and an input shaft of the speed reducer are integrally formed.

3. The gear motor according to claim 1 or 2, further comprising:
cover members disposed at opposite axial ends of the motor and the speed reducer,
wherein an oil seal is not disposed on the cover members.

4. The gear motor according to any one of claims 1 to 3,
wherein an output shaft of the motor and an input shaft of the speed reducer share at least one shaft component.

5. The gear motor according to any one of claims 1 to 4,
wherein the motor and the speed reducer are not partitioned off from each other.

6. The gear motor according to any one of claims 1 to 5,
wherein a field magnetic pole of the motor and a magnetic pole of an input shaft of the speed reducer are common.

7. The gear motor according to any one of claims 1 to 3, further comprising:
a partition wall that partitions the motor and the speed reducer off from each other.

8. The gear motor according to any one of claims 1 to 7,
wherein an output shaft of the motor and an input shaft of the speed reducer are supported by a bearing disposed on a load side of the speed reducer and by a bearing disposed on a counter load side of the motor.

9. The gear motor according to any one of claims 1 to 8, further comprising:
two bearings that support an output shaft of the motor and an input shaft of the speed reducer, and two other bearings that support an output shaft of the speed reducer.

10. The gear motor according to any one of claims 1 to 9,
wherein a magnetic pole that does not contribute to a torque generation of the motor is formed in an input shaft of the speed reducer.

11. The gear motor according to any one of claims 1 to 10,
wherein the speed reducer includes an input shaft including a plurality of inner pole magnets arranged in a circumferential direction, an output shaft disposed on a radially outer side of the input shaft and including a plurality of magnetic pole pieces arranged in the circumferential direction, and a plurality of outer pole magnets disposed on a radially outer side of the output shaft and arranged in the circumferential direction.
